(19) Europäisches Patentamt
European Patent Office
Office européen des brevets

(11) **EP 4 517 258 B1**

(12) **EUROPEAN PATENT SPECIFICATION**

(45) Date of publication and mention
of the grant of the patent:
**27.05.2026 Bulletin 2026/22**

(21) Application number: **24196685.2**

(22) Date of filing: **27.08.2024**

(51) International Patent Classification (IPC):
***G01C 11/00*** *(2006.01)* ***G06T 7/50*** *(2017.01)*

(52) Cooperative Patent Classification (CPC):
**G01C 11/00; G06T 7/50;** G06T 2207/10032

(54) **APPARATUS AND METHOD FOR GENERATING DEPTH MAP**

VORRICHTUNG UND VERFAHREN ZUM ERZEUGEN EINER TIEFENKARTE

DISPOSITIF ET PROCÉDÉ DE CRÉATION D'UNE CARTE DE PROFONDEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.08.2023 KR 20230115835**

(43) Date of publication of application:
**05.03.2025 Bulletin 2025/10**

(73) Proprietors:
• **Hyundai Motor Company**
**Seoul 06797 (KR)**
• **Kia Corporation**
**Seocho-gu**
**Seoul 06797 (KR)**

(72) Inventors:
• **LIM, Jun Young**
**18280 Gyeonggido (KR)**
• **RYU, Hyun Jee**
**18280 Gyeonggido (KR)**
• **MOON, Gun Hee**
**18280 Gyeonggido (KR)**
• **LEE, Hong Ju**
**18280 Gyeonggido (KR)**

(74) Representative: **Hoffmann Eitle**
**Patent- und Rechtsanwälte PartmbB**
**Arabellastraße 30**
**81925 München (DE)**

(56) References cited:
**WO-A1-2021/051278 WO-A1-2022/093376**

**Description**

## CROSS-REFERENCE TO RELATED APPLICATION

This application claims the benefit of priority to Korean Patent Application No. 10-2023-0115835, filed in the Korean Intellectual Property Office on August 31, 2023.

## TECHNICAL FIELD

The present disclosure relates to an apparatus and a method for generating a depth map to generate the depth map using an image sensor.

## BACKGROUND

Various sensors, such as a global positioning system/inertial navigation system (GPS/INS), a radar altimeter, and a barometer, may be loaded into an aerial vehicle to obtain height information during flight. Because such an aerial vehicle requires the integrity of the sensor for airframe operation, it should be prepared for malfunctions of the various sensors while the airframe of the aerial vehicle is in flight.

A method for learning a depth map image obtained by projecting depth information onto an image obtained using a mono camera may be used to estimate the depth information using only the mono camera. To obtain a depth map image used as training data, a method for fusing a two-dimensional (2D) image obtained using the mono camera and data obtained in the same time by means of a distance sensor (e.g., a depth camera, light detection and ranging (LiDAR), or the like) and projecting distance data onto the 2D image may be used.

However, the distance sensor, such as the depth camera, is relatively very short in measurement distance. It may be difficult for a distance sensor such as LiDAR to obtain depth information of all image pixels, which is for being projected onto the 2D image, due to the number of channels of the LiDAR and a limit in the interval of the LiDAR. Due to this, it may be difficult to form a depth map image in the field of aviation. It may be difficult to obtain depth information for covering all image areas although radio detecting and ranging (RADAR) with a relatively long measurement distance is used. Furthermore, if depth data is obtained using the RADAR, it may take higher cost and data throughput.

WO 2021/051278 A1 relates to an earth surface feature identification method and device, an unmanned aerial vehicle, and a computer readable storage medium. In more detail, the method comprises: obtaining earth surface image information; processing a plurality of pieces of color channel information, and image depth information to obtain a feature map containing earth surface semantic information; and determining an earth surface feature identification result according to the earth surface semantic information in the feature map.

WO 2022/093376 A1 relates to a vehicle terrain capture system and display of a 3D digital image and a 3D sequence. A system on a vehicle is presented to capture a plurality of datasets of a terrain, including 2D digital source images (RGB) of a terrain and the like, including a smart device having a memory device for storing an instruction, a processor in communication with the memory and configured to execute the instruction, a plurality of capture devices in communication with the processor and each capture device configured to capture its dataset of the terrain, the plurality of capture devices affixed to the vehicle, the vehicle traverses the terrain in a designated pattern, processing steps to configure datasets, and a display configured to display a simulated multidimensional digital image sequence and/or a multidimensional digital image.

## SUMMARY

The present invention is defined by the independent claims. Advantageous embodiments are presented in the dependent claims.

The processor of the apparatus according to the invention, as defined in claim 1, is configured to recognize a landmark from the obtained image and obtain coordinates of a center point of the landmark, and to obtain, based on the coordinates of the center point of the landmark, the DSM data.

The processor is configured tc obtain posture information of the aerial vehicle, preferably from a navigation device, correct, based on the posture information of the aerial vehicle, the obtained image, and transform, based on perspective transform, the corrected image into the bird-eye view image.

The posture information of the aerial vehicle comprises pitch information of the aerial vehicle and roll information of the aerial vehicle.

The processor may be configured to transform data in pixels in the bird-eye view image into data in meters, and match the transformed data in meters with the DSM data to generate three-dimensional (3D) image data.

The processor may be configured to inversely transform, based on inverse perspective transform, the matched bird-eye view image into data in pixels, determine depth information based on the inversely transformed data, height information of the aerial vehicle, and posture information of the aerial vehicle, and generate the depth map image based on the determined depth information.

The processor may be configured to replace height information of the matched bird-eye view image with the determined depth information to generate the depth map image.

The processor may be configured to store the depth map image in a database server.

The camera may comprise at least one of an electro-optics sensor or infrared sensor.

According to the invention, in the method defined in claim 8, the obtaining of the image comprises recognizing a landmark from the obtained image and obtaining coordinates of a center point of the landmark, and further comprises obtaining, based on the coordinates of the center point of the landmark, the DSM data.

The transforming of the obtained image into the bird-eye view image comprises obtaining posture information of the flying aerial vehicle, preferably from a navigation device, correcting, based on the posture information of the flying aerial vehicle, the obtained image, and transforming, based on perspective transform, the corrected image into the bird-eye view image.

The posture information of the flying aerial vehicle comprises pitch information of the flying aerial vehicle and roll information of the flying aerial vehicle.

The matching the bird-eye view image with the DSM data may comprise transforming data in pixels in the bird-eye view image into data in meters and matching the transformed data in meters with the DSM data to generate 3D image data.

The generating of the depth map image may comprise inversely transforming, based on inverse perspective transform, the matched bird-eye view image into data in pixels, determining depth information based on the inversely transformed data, height information of the flying aerial vehicle, and posture information of the flying aerial vehicle, and generating the depth map image based on the determined depth information,

The generating of the depth map image based on the determined depth information may comprise replacing height information of the matched bird-eye view image with the determined depth information to generate the depth map image.

The method may further comprise storing the depth map image in a database server.

The camera may comprise at least one of an electro-optics sensor or infrared sensor.

## BRIEF DESCRIPTION OF THE DRAWINGS

The above and other objects, features and advantages of the present disclosure will be more apparent from the following detailed description taken in conjunction with the accompanying drawings:

FIG. 1 shows an example of a configuration of an apparatus for generating a depth map according to an example of the present disclosure;
FIGS. 2 and 3 show an example of an image transformation method according to an example of the present disclosure;
FIG. 4 shows an example of a method for generating a depth map by means of map matching according to an example of the present disclosure; and
FIG. 5 shows an example of a method for generating a depth map according to an example of the present disclosure.

## DETAILED DESCRIPTION

Hereinafter, some examples of the present disclosure will be described in detail with reference to example drawings. In the drawings, the same reference numerals will be used throughout to designate the same or equivalent components. In addition, a detailed description of well-known features or functions will be ruled out in order not to unnecessarily obscure the gist of the present disclosure.

In describing components of examples of the present disclosure, the terms first, second, A, B, (a), (b), and the like may be used herein. These terms are only used to distinguish one component from another component, but do not limit the corresponding components irrespective of the order or priority of the corresponding components. Furthermore, unless otherwise defined, all terms including technical and scientific terms used herein are to be interpreted as is customary in the art to which this present disclosure belongs. It will be understood that terms used herein should be interpreted as having a meaning that is consistent with their meaning in the context of this present disclosure and the relevant art and will not be interpreted in an idealized or overly formal sense unless expressly so defined herein.

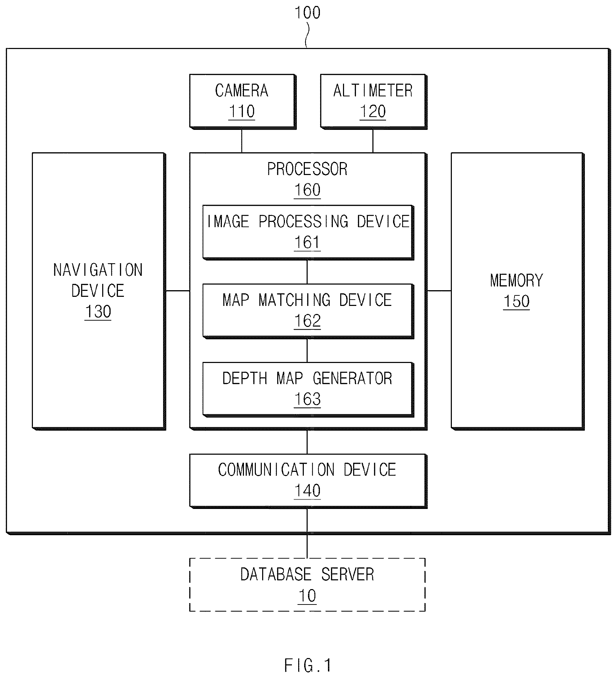

FIG. 1 shows an example of a configuration of an apparatus for generating a depth map according to an example of the present disclosure.

An apparatus 100 for generating a depth map is mounted on an aerial vehicle. The aerial vehicle may be an aerial vehicle capable of performing autonomous flight. Referring to FIG. 1, the apparatus 100 for generating the depth map may include a camera 110, an altimeter 120, a navigation device 130, a communication device 140, a memory 150, and a processor 160. A depth map may be an image (or image channel) that includes information relating to the distance of surfaces of one or more objects from a viewpoint. A depth map may be rendered by obtaining a plurality of images from one or more viewpoints and determining a distance from one or more pixel to one or more image sensors (e.g., cameras).

The camera 110 is mounted on the aerial vehicle to face the ground during flight. The camera 110 may capture the ground during flight and may output the captured image (or a ground image). The camera 110 may include an image sensor such as an electro-optics sensor or an infrared (EO/IR) sensor.

The altimeter 120 may be mounted on the aerial vehicle to measure an altitude (or current height information) of the aerial vehicle. The altimeter 120 may include at least one of a radar altimeter or a barometer, or any combination thereof. The altimeter 120 may include a global positioning system (GPS).

The navigation device 130 may obtain information about a location, an altitude, a speed, and/or the like of the aerial vehicle using a GPS satellite. The navigation device 130 may perform flight route guidance from a starting point to a destination. Although not shown in the drawing, the navigation device 130 may include a memory, a GPS receiver, a communication circuit, a processor, and/or the like.

The communication device 140 may support to perform wired and/or wireless communication between the apparatus 100 for generating the depth map and an external electronic device (e.g., a database server 10, a gateway and/or the like). The communication device 140 may include a communication processor, a communication circuit, an antenna, a transceiver, and/or the like.

The memory 150 may be a non-transitory storage medium which stores instructions executed by the processor 160. The memory 150 may be implemented at least one of storage media such as a flash memory, a hard disk, a solid state disk (SSD), a secure digital (SD) card, a random access memory (RAM), a static RAM (SRAM), a read only memory (ROM), a programmable ROM (PROM), an electrically erasable and programmable ROM (EEPROM), or an erasable and programmable ROM (EPROM).

The memory 150 may store a learning algorithm, a camera position, a camera installation angle, and/or the like. The memory 150 may store the image captured by the camera 110. The memory 150 may store a previously constructed digital surface model (DSM). The DSM may be defined as data including height information, such as all objects (e.g., a terrain, a tree, a building, an artificial structure, and the like) on the ground, as well as the ground. The memory 150 may store input data, output data, and/or the like according to an operation of the processor 160.

The processor 160 may be connected with the camera 110, the altimeter 120, the navigation device 130, the communication device 140, and the memory 150 and may control the overall operation of the apparatus 100 for generating the depth map. The processor 160 may be implemented as at least one of processing devices such as an application specific integrated circuit (ASIC), a digital signal processor (DSP), a programmable logic device (PLD), a field programmable gate array (FPGA), a central processing unit (CPU), a microcontroller, or a microprocessor. The processor 160 may include an image processing device 161, a map matching device 162, and a depth map generator 163. The image processing device 161, the map matching device 162, and the depth map generator 163 may be implemented as at least one of a hardware module executed by the processor 160 or a software module executed by the processor 160, or any combination thereof. The software module may reside on the storage medium.

The image processing device 161 may obtain an image (or a ground image) in the direction of the ground (or a lower direction) using the camera 110, while the aerial vehicle is in flight. The image processing device 161 may recognize a landmark from the image obtained by the camera 110 (e.g., using the learning algorithm). The landmark may be a geographic feature with symbolic meaning, which is located on a flight route of the aerial vehicle. The learning algorithm may learn the landmark in advance. The image processing device 161 may obtain GPS reference coordinates registered with the landmark (or coordinates of a center point of the landmark or coordinates of a central point of the landmark).

The map matching device 162 may perform coordinate system matching for map matching. The map matching device 162 may obtain posture information of the aerial vehicle from the navigation device 130 to perform the coordinate system matching. The posture information of the aerial vehicle may include roll, pitch, yaw, and the like of the aerial vehicle. The map matching device 162 may process (or transform) a two-dimensional (2D) (or a planar) ground image into a bird-eye view image using current posture information of the aerial vehicle and an angle at which the camera 110 is installed in the aerial vehicle (i.e., a camera installation angle). The bird-eye view image may be defined as an image in a state in which roll, pitch, and yaw are "0". A bird-eye view may be taken a view above a certain distance from a ground and/or an object and may capture an area larger than a threshold (e.g., a threshold area configured in memory of the aerial vehicle). A bird-eye view image may indicate (and/or may be associated with) a perspective angle from the aerial vehicle (e.g., row, yaw, pitch information of the aerial vehicle and/or one or more cameras of the aerial vehicle). A bird-eye view image may indicate (and/or may be associated with) time information and/or other indicators of a frame of the bird-eye view image. A bird-eye view image may indicate (and/or may be associated with) one or more landmark images included in the bird-eye view image. A landmark may include one or more objects having a size greater than a threshold size.

The map matching device 162 may match the landmark (e.g., towers, bridges, stadium, national park, rivers, monuments, mountains, buildings, etc.) with a GPS/inertial navigation system (INS)-based image using the DSM. The map matching device 162 may map-match the DSM with the bird-eye view image on the basis of the coordinates of the center point of the landmark. The map matching device 162 may convert horizontal and vertical positions per image pixel (or position coordinates (x, y) on a pixel coordinate system) into meter units for map matching. The map matching device 162 may convert a data unit of the DSM into a meter unit and may match respective data around the coordinates of the center point of the landmark to add height data in meters.

The depth map generator 163 may generate a depth map image (or a depth map) of the image using a height of each of image pixel coordinates obtained by means of map matching and height information of the aerial vehicle, which is obtained by the altimeter 120. The depth map generator 163 may change data (X, Y, h) in meters, which is obtained by means of map matching, to data (x, y, h) in pixels, to generate a depth map image.

The depth map generator 163 may transmit the generated depth map image to the database server 10 using the communication device 140. The database server 10 may receive, store, and manage the depth map image. If there is a request from a flight control device (not shown) of the aerial vehicle, the database server 10 may search for the requested depth map image and may transmit the found depth map image to the aerial vehicle.

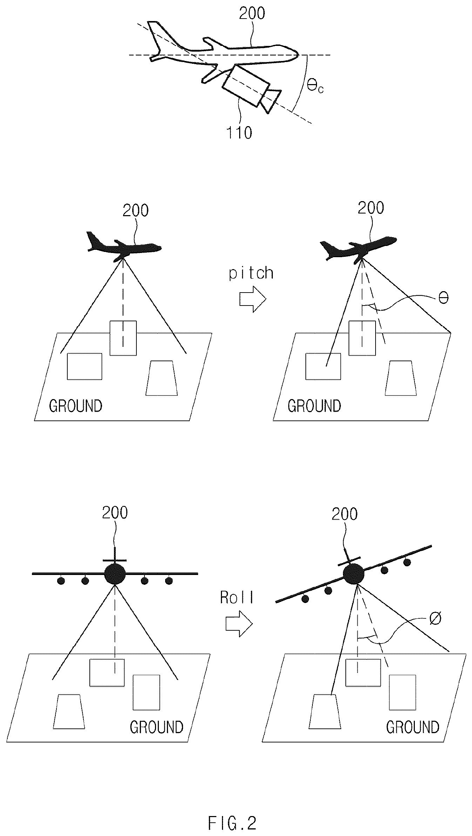

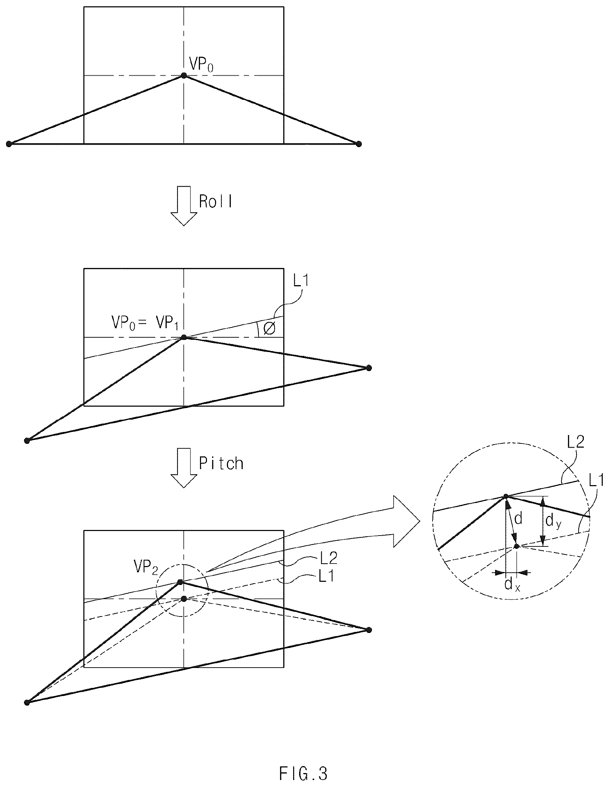

FIGS. 2 and 3 show an example of an image transformation method according to an example of the present disclosure.

Movement of an aerial vehicle 200 may be represented based on 6 degrees of freedom (DOF), X, Y, Z, roll, pitch, and yaw. A DSM may be represented as data (X, Y, Z) in a state in which roll, pitch, and yaw are "0". An image obtained by a camera 110 may be represented as (x, y) data on a pixel coordinate system. Thus, image data and DSM data should be represented on the same coordinate system to match and fuse the image data with the DSM data.

An image processing device 161 may transform the image (or image data) obtained by the camera 110 into a bird-eye view image in a state in which each of roll and pitch is "0". In other words, the image processing device 161 may transform coordinates of each pixel of the image into a coordinate system of the bird-eye view image (or a coordinate system of DSM data).

The image processing device 161 may correct the image obtained by the camera 110 based on posture information of the aerial vehicle 200 and posture information of the camera 110. As shown in FIG. 2, an installation angle of the camera 110 installed on the aerial vehicle 200, that is, pitch $\theta$ of the camera 110 may be fixed, but pitch $\theta$ and roll $\varphi$ included in the posture information of the aerial vehicle 200 during flight may change. As the pitch $\theta$ and the roll $\varphi$ of the aerial vehicle 200 change, as shown in FIG. 3, a position of a vanishing line changes on the image obtained by the camera 110 (L1→L2). The image processing device 161 may calculate a position change value of a vanishing point by a change in posture of the aerial vehicle 200 on the basis of the vanishing point located on the vanishing line to prevent the position of the vanishing line from changing on an image obtained by a change in posture of the camera 110 according to the change in posture of the aerial vehicle 200 and may correct an image obtained using the calculated position change value of the vanishing point to an image before the posture of the aerial vehicle 200 changes.

Referring to FIG. 3, if coordinates VP of the vanishing point of the image is $VP_0$ before pitch $\theta$ and roll $\varphi$ of the aerial vehicle 200 change, although the roll $\varphi$ of the aerial vehicle 200 changes, coordinates $VP_1$ of the vanishing point of the image according to a change in roll does not change to the coordinates $VP_0$ of the vanishing point of the image before the pitch $\theta$ and the roll $\varphi$ of the aerial vehicle 200 change. If the pitch $\theta$ and the roll $\varphi$ of the aerial vehicle 200 change, the coordinates VP of the vanishing point of the image may move from $VP_0$ (= $VP_1$) to $VP_2$. The image processing device 161 may calculate a vertical distance between the coordinates $VP_0$ (= $VP_1$) of the vanishing point of the image before the pitch $\theta$ and the roll $\varphi$ of the aerial vehicle 200 change and the coordinates $VP_2$ of the vanishing point of the image in which the pitch $\theta$ and the roll $\varphi$ of the aerial vehicle 200 changes, that is, a position change value of the vanishing point, using Equation 1 below.

[Equation 1]

$$d = \tan(\theta_c + \theta) * \frac{f_x + f_y}{2}$$

Herein, $f_x$ may be defined as the focal length in the x-axis direction, and $f_y$ may be defined as the focal length in the y-axis direction.

The image processing device 161 may calculate a vertical distance $d_x$ in the x-axis direction and a vertical distance $d_y$ in the y-axis direction between the coordinates $VP_0$ of the vanishing point before the posture of the aerial vehicle 200 changes and the coordinates $VP_2$ of the vanishing point if the posture of the aerial vehicle 200 changes, using Equations 2 and 3.

[Equation 2]

$$d_x = d * \cos(\varphi)$$

[Equation 3]

$$d_y = d * \sin(\varphi)$$

The image processing device 161 may correct pixel coordinates of the image captured by the camera 110 using $d_x$ and $d_y$ calculated by Equations 2 and 3 above. In other words, the image processing device 161 may change an image with the coordinates $VP_2$ of the vanishing point, which is captured by the camera 110, to an image with the coordinates $VP_0$ of the vanishing point.

The image processing device 161 may perform perspective transform for the corrected image. The image processing device 161 may apply a transform matrix P to calculate coordinates (x', y'), the perspective transform of which is performed, for each of pixel coordinates (x, y) of the corrected image like Equation 4 below.

[Equation 4]

$$w \begin{pmatrix} x' \\ y' \\ 1 \end{pmatrix} = \begin{pmatrix} p_{11} & p_{12} & p_{13} \\ p_{21} & p_{22} & p_{23} \\ p_{31} & p_{32} & p_{33} \end{pmatrix} \begin{pmatrix} x - d_x \\ y - d_y \\ 1 \end{pmatrix}$$

Herein, w is the constant, and the transform matrix is that $P = \begin{pmatrix} p_{11} & p_{12} & p_{13} \\ p_{21} & p_{22} & p_{23} \\ p_{31} & p_{32} & p_{33} \end{pmatrix}$.

As such, the image processing device 161 may transform the corrected image into a bird-eye view image by means of perspective transform.

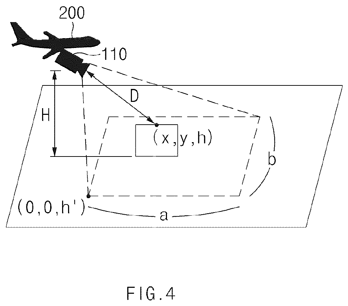

FIG. 4 shows an example of a method for generating a depth map by means of map matching according to an example of the present disclosure.

A map matching device 162 may perform data matching between a DSM and a bird-eye view image by means of map matching. In detail, the map matching device 162 may change image data from pixel-based (x, y) data to a frame of meter (X, Y) data which has the same real world units as DSM data to match the image data with the DSM data. The map matching device 162 may transform pixel (x, y) data into meter (X, Y) data using Equation 5 below. A transform ratio of meter to pixel in Equation 5 below may be determined in advance by means of calibration.

[Equation 5]

$$(\texttt{pixel:meter} = 1 : n)$$

The map matching device 162 may move both the transformed data and the DSM data in parallel by using the center point of a landmark recognized by an image processing device 161 as the origin (0,0) to match the transformed data with the DSM data. The map matching device 162 may add Z information of DSM data (X, Y, h) with the same coordinates (X, Y) as coordinates (X, Y) of the image data which moves in parallel to generate data for three-dimensional (3D) coordinates (X, Y, h).

The map matching device 162 may transform the image data (X, Y, h) generated by matching the image and the DSM from data in meters to data in pixels. At this time, the map matching device 162 may change data (X, Y, h) in meters to data (x, y, h) in pixels using Equation 5 above.

The map matching device 162 may transform the transformed data (x, y, h) in pixels into a raw image (x, y, h) before correcting roll and pitch using inverse perspective transform. The map matching device 162 may perform inverse perspective transform using Equation 6 below.

[Equation 6]

$$wP^{-1}\begin{pmatrix} x' \\ y' \\ 1 \end{pmatrix} = \begin{pmatrix} x - d_x \\ y - d_y \\ 1 \end{pmatrix}$$

A depth map generator 163 may estimate depth information D using the transformed data (x, y, h), current height information H of the aerial vehicle 200, and posture information of the aerial vehicle 200. The depth map generator 163 may calculate an angle $\alpha$ in an image width direction and an angle $\beta$ in an image height direction for a pixel (x, y, h) using Equations 7 and 8.

[Equation 7]

$$\alpha = C_x * \frac{\left(x - \dfrac{a}{2}\right)}{a}$$

[Equation 8]

$$\beta = C_y * \frac{\left(y - \dfrac{a}{2}\right)}{b}$$

Herein, a is the image width, be is the image height, and $C_x$ and $C_y$ are the width and the height of the field of view (FOV) of the camera (i.e., the camera 110).

The depth map generator 163 may estimate the depth information D based on height information h of the transformed data (x, y, h), the current height information H of the aerial vehicle 200, and the angles $\alpha$ and $\beta$. The depth map generator 163 may calculate the depth information D using Equation 9 below.

[Equation 9]

$$D = \frac{(H - h)}{\cos\alpha * \cos\beta}$$

The depth map generator 163 may generate data (X, Y, D) using the estimated depth information D and may generate a depth map image using the generated data (X, Y, D). The depth map generator 163 may transmit the generated depth map image to a database server 10 through a communication device 140. The database server 10 may receive and store the depth map image transmitted from the depth map generator 163.

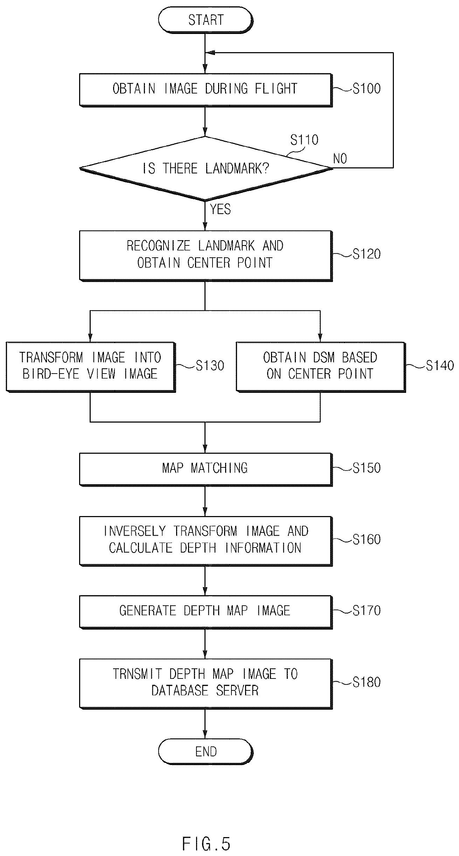

FIG. 5shows an example of a method for generating a depth map according to an example of the present disclosure.

An apparatus 100 for generating a depth map may generate the depth map in a state in which an aerial vehicle is in flight. The apparatus 100 for generating the depth map may initiate a depth map generation function from a time point if a possibility of obtaining an image during flight, a possibility of normally operating a GPS/INS and obtaining data, a possibility of identifying DSM data, a possibility of obtaining a current posture and position of the aerial vehicle, or the like is identified. In other words, the apparatus 100 for generating the depth map may identify components 110 to 160 normally operate by means of self-diagnosis and may execute depth map generation.

In S100, a processor 160 of the apparatus 100 for generating the depth map may obtain an image during flight. The processor 160 may obtain a ground image using a camera 110 mounted on the aerial vehicle to face the ground. The camera 110 may obtain an image in the direction of the ground under an instruction of the processor 160 and may directly transmit the obtained image to the processor 160. The camera 110 may store the obtained image in the memory 150.

In S110, the processor 160 may determine whether there is a landmark in the obtained image.

If it is determined that there is the landmark in the obtained image, in S120, the processor 160 may recognize the landmark and may obtain a center point of the landmark. The processor 160 may recognize the landmark from the obtained image by means of a learning algorithm. The learning algorithm may learn information (or data) associated with the landmark located on a flight route of the aerial vehicle in advance. The landmark may be a geographic feature with symbolic meaning in a specific area. The processor 160 may obtain GPS reference coordinates (or GPS/INS reference coordinates) registered with the recognized landmark.

In S130, the processor 160 may transform the obtained image into a bird-eye view image. The processor 160 may obtain current posture information of the aerial vehicle from a navigation device 130. The posture information of the aerial vehicle may include information such as roll and/or pitch. The processor 160 may transform an image obtained based on the obtained posture information and pitch of the camera 110 (or a camera installation angle) into a bird-eye view image. The bird-eye view image may be defined as an image in a state in which each of roll and pitch is "0".

In S140, the processor 160 may obtain a DSM on the basis of the center point of the landmark. The processor 160 may obtain DSM data to which (X, Y) coordinates of the center point of the landmark are identical. The processor 160 may obtain DSM data from a server (not shown) which provides the DSM data and may temporarily store the obtained DSM data in the memory 150.

In S150, the processor 160 may map-match the transformed bird-eye view image with the obtained DSM. The processor 160 may convert a horizontal and vertical position per pixel of the transformed bird-eye view image into meter units. Furthermore, the processor 160 may convert data units of the DSM into meter units. In other words, the processor 160 may allow a coordinate system of the transformed bird-eye view image and a coordinate system of the obtained DSM to be identical to each other. The processor 160 may map-match the bird-eye view image with the DSM to obtain an image including height information of the ground per image pixel.

In S160, the processor 160 may perform inverse transform (or inverse perspective transform) of the map-matched image. The processor 160 may match respective pieces of data by using the center of the landmark as the origin to add height data in meters. The processor 160 may perform inverse transform to change a coordinate system of the map-matched image to a coordinate system of a raw image. The processor 160 may calculate depth information of the image using the posture information and the height information of the aerial vehicle.

In S170, the processor 160 may generate a depth map using the calculated depth information. The processor 160 may change data (X, Y, h) in meters, which is obtained by means of the map matching, to data (x, y, h) in pixels, to generate a depth map. The processor 160 may replace the height information in the map-matched image with the calculated depth information to generate a depth map image which is a three-dimensional (3D) image (or a 3-channel image).

In S180, the processor 160 may transmit the generated depth map image to a database server 10. The depth processor 160 may transmit the generated depth map image to the database server 10 using a communication device 140. The database server 10 may receive and store the depth map image.

Examples of the present disclosure may generate a low-cost depth map with less data throughput using a digital surface model (DSM), altitude information of the aerial vehicle, and a mono camera of the aerial vehicle.

The present disclosure has been made to solve the above-mentioned problems occurring in the prior art while advantages achieved by the prior art are maintained intact.

An example of the present disclosure provides an apparatus and a method for generating a depth map to generate a low-cost depth map with less data throughput using a digital surface model (DSM), altitude information of an aerial vehicle, and a mono camera of the aerial vehicle.

Another example of the present disclosure provides an apparatus and a method for generating a depth map to obtain training data of the learning algorithm for estimating an altitude of an aerial vehicle using only an image sensor.

The technical problems to be solved by the present disclosure are not limited to the aforementioned problems, and any other technical problems not mentioned herein will be clearly understood from the following description by those skilled in the art to which the present disclosure pertains.

Hereinabove, although the present invention has been described with reference to examples and the accompanying drawings, the present invention is not limited thereto, but may be variously modified and altered by those skilled in the art to which the present invention pertains without departing from the scope of the present invention claimed in the following claims. The scope of the present invention should be construed on the basis of the accompanying claims.

**Claims**

1. An apparatus mounted on an aerial vehicle comprising:

    a camera mounted on the aerial vehicle; and
    a processor coupled to the camera,
    wherein the processor is configured to:

        obtain, based on information from the camera during flight of the aerial vehicle, an image, correct the obtained image based on posture information of the camera and posture information of the aerial vehicle including pitch and roll information of the aerial vehicle, using a calculated position change value of a vanishing point of the image compared to an image before the posture of the aerial vehicle changes;
generate a bird's-eye view image by performing a perspective transformation on the corrected image,
match the bird's-eye view image with digital surface model, DSM data,
generate, based on the matched bird's - eye view image, a depth map image, and
output, based on the depth map image, a signal for an operation control of the aerial vehicle, wherein the processor is configured to:

recognize a landmark from the obtained image and obtain coordinates of a center point of the landmark; and
obtain, based on the coordinates of the center point of the landmark, the DSM data.

2. The apparatus of claim 1, wherein the processor is configured to:

obtain the posture information of the aerial vehicle from a navigation device, correct the obtained image by adjusting pixel coordinates based on the posture information of the aerial vehicle and of the camera and transform the corrected image into the bird's-eye view image by converting the pixel coordinates using a transformation matrix.

3. The apparatus of one of claims 1 to 2, wherein the processor is configured to:

transform data in pixels in the bird's-eye view image into data in meters, and
match the transformed data in meters with the DSM data to generate three-dimensional image data.

4. The apparatus of one of claims 1 to 3, wherein the processor is configured to:

perform an inverse perspective transform on the matched bird's-eye view image to change a coordinate system of the matched image to a coordinate system of a raw image,
determine depth information based on the inversely transformed data, height information of the aerial vehicle, and posture information of the aerial vehicle, and
generate the depth map image based on the determined depth information.

5. The apparatus of claim wherein the processor is configured to replace height information of the matched bird's-eye view image with the determined depth information to generate the depth map image.

6. The apparatus of one of claims 1 to 5, wherein the processor is configured to store the depth map image in a database server.

7. The apparatus of one of claims 1 to 6, wherein the camera comprises at least one of an electro-optics sensor or infrared sensor.

8. A method comprising:

obtaining, based on information from a camera mounted on a flying aerial vehicle, an image;
correcting the obtained image based on posture information of the camera and posture information of the flying aerial vehicle including pitch and roll information of the flying aerial vehicle, using a calculated position change value of a vanishing point of the image compared to an image before the posture of the flying aerial vehicle changes;
generating, by a processor, a bird's-eye view image by performing a perspective transformation on the corrected image;
matching the bird's-eye view image with digital surface model, DSM, data;
generating, based on the matched bird's-eye view image, a depth map image; and
outputting, based on the depth map image, a signal for an operation control of the flying aerial vehicle, wherein the obtaining of the image includes:

recognizing a landmark from the obtained image;
obtaining coordinates of a center point of the landmark; and
obtaining, based on the coordinates of the center point of the landmark, the DSM data.

9. The method of claim 8, comprising:

obtaining the posture information of the flying aerial vehicle from a navigation device;
correcting the obtained image by adjusting pixel coordinates based on the posture information of the flying aerial vehicle and of the camera; and
transforming the corrected image into the bird's-eye view image by converting the pixel coordinates using a transformation matrix.

10. 11. The method of one of claims 8 to 9, wherein the matching the bird's-eye view image with the DSM data comprises:

transforming data in pixels in the bird's-eye view image into data in meters; and
matching the transformed data in meters with the DSM data to generate 3D image data.

11. The method of one of claims 8 to 10, wherein the generating of the depth map image includes:

performing an inverse perspective transform on the matched
bird's-eye view image to change a coordinate system of the matched image to a coordinate system of a raw image;
determining depth information based on the inversely transformed data, height information of the flying aerial vehicle, and posture information of the flying aerial vehicle; and
generating the depth map image based on the determined depth information.

12. The method of claim 11, wherein the generating of the depth map image based on the determined depth information includes:
replacing height information of the matched bird's-eye view image with the determined depth information to generate the depth map image.

**Patentansprüche**

1. Auf einem Luftfahrzeug montierte Einrichtung, umfassend:

eine auf dem Luftfahrzeug montierte Kamera; und
einen mit der Kamera gekoppelten Prozessor,
wobei der Prozessor dazu ausgebildet ist,

ein Bild zu erhalten, basierend auf Informationen von der Kamera während des Flugs des Luftfahrzeugs,
das erhaltene Kamerabild, basierend auf Lageinformation von und Lageinformation des Luftfahrzeugs, die Nick- und Rollwinkelinformation des Luftfahrzeugs einschließt, zu korrigieren, unter Verwendung eines berechneten Positionsänderungswerts eines Fluchtpunkts des Bildes im Vergleich zu einem Bild, bevor sich die Lage des Luftfahrzeugs ändert;
ein Vogelperspektivbild zu erzeugen, indem eine Perspektivtransformation an dem korrigierten Bild durchgeführt wird,
das Vogelperspektivbild mit Daten eines digitalen Oberflächenmodells (Digital Surface Model, DSM) abzugleichen,
basierend auf dem abgeglichenen Vogelperspektivbild ein Tiefenkartenbild zu erzeugen, und, basierend auf dem Tiefenkartenbild,
ein Signal für eine Steuerung des Betriebs des Luftfahrzeugs auszugeben, wobei der Prozessor ausgebildet ist, um:

eine Landmarke aus dem erhaltenen Bild zu erkennen und
Koordinaten eines Mittelpunktes der Landmarke zu erhalten; und
die DSM-Daten zu erhalten, basierend auf den Koordinaten des Mittelpunktes der Landmarke.

2. Einrichtung nach Anspruch 1, wobei der Prozessor dazu ausgebildet ist,

die Lageinformation des Luftfahrzeugs von einer Navigationsvorrichtung zu erhalten,
das erhaltene Bild zu korrigieren, indem Pixelkoordinaten, basierend auf der Lageinformation des Luftfahrzeugs und der Lageinformation der Kamera, angepasst werden, und
das korrigierte Bild in das Vogelperspektivbild zu transformieren, indem die Pixelkoordinaten unter Verwendung einer Transformationsmatrix umgewandelt werden.

3. Einrichtung nach einem der Ansprüche 1 bis 2, wobei der Prozessor dazu ausgebildet ist,

Daten in Pixeln in dem Vogelperspektivbild in Daten in Metern zu transformieren, und
die transformierten Daten in Metern mit den DSM-Daten abzugleichen, um dreidimensionale Bilddaten zu erzeugen.

4. Einrichtung nach einem der Ansprüche 1 bis 3, wobei der Prozessor dazu ausgebildet ist,

eine inverse Perspektivtransformation an dem abgeglichenen Vogelperspektivbild durchzuführen, um ein Koordinatensystem des abgeglichenen Bildes in ein Koordinatensystem eines Rohbildes zu ändern,
Tiefeninformation zu bestimmen, basierend auf den invers transformierten Daten, der Höheninformation des Luftfahrzeugs und der Lageinformation des Luftfahrzeugs, und
das Tiefenkartenbild zu erzeugen, basierend auf der bestimmten Tiefeninformation.

5. Einrichtung nach Anspruch 4,
wobei der Prozessor ausgebildet ist, Höheninformation des abgeglichenen Vogelperspektivbildes durch die bestimmte Tiefeninformation zu ersetzen, um das Tiefenkartenbild zu erzeugen.

6. Einrichtung nach einem der Ansprüche 1 bis 5, wobei der Prozessor ausgebildet ist, das Tiefenkartenbild in einem Datenbankserver zu speichern.

7. Einrichtung nach einem der Ansprüche 1 bis 6, wobei die Kamera mindestens einen von einem elektrooptischen Sensor oder einem Infrarotsensor umfasst.

8. Verfahren, umfassend:

Erhalten eines Bildes, basierend auf Informationen von einer auf einem fliegenden Luftfahrzeug montierten Kamera;
Korrigieren des erhaltenen Bildes, basierend auf Lageinformation der Kamera und Lageinformation des fliegenden Luftfahrzeugs einschließlich Nick- und Rollwinkelinformation des fliegenden Luftfahrzeugs, unter Verwendung eines berechneten Positionsänderungswerts eines Fluchtpunkts des Bildes im Vergleich zu einem Bild, bevor sich die Lage des fliegenden Luftfahrzeugs ändert;
Erzeugen eines Vogelperspektivbildes, durch einen Prozessor, indem eine Perspektivtransformation an dem korrigierten Bild durchgeführt wird;
Abgleichen des Vogelperspektivbildes mit Daten eines digitalen Oberflächenmodells (Digital Surface Model, DSM);
Erzeugen eines Tiefenkartenbildes, basierend auf dem abgeglichenen Vogelperspektivbild; und
Ausgeben eines Signals für eine Steuerung des Betriebs des fliegenden Luftfahrzeugs, basierend auf dem Tiefenkartenbild,
wobei das Erhalten des Bildes Folgendes einschließt:

Erkennen einer Landmarke aus dem erhaltenen Bild ;
Erhalten Koordinaten eines Mittelpunktes der Landmarke; und
Erhalten der DSM-Daten, basierend auf den Koordinaten des Mittelpunktes der Landmarke.

9. Verfahren nach Anspruch 8, umfassend:

Erhalten der Lageinformation des fliegenden Luftfahrzeugs von einer Navigationsvorrichtung;
Korrigieren des erhaltenen Bildes, indem Pixelkoordinaten, basierend auf der Lageinformation des fliegenden Luftfahrzeugs und der Lageinformation der Kamera, angepasst werden; und
Transformieren des korrigierten Bildes in das Vogelperspektivbild, indem die Pixelkoordinaten unter Verwendung einer Transformationsmatrix umgewandelt werden.

10. Verfahren nach einem der Ansprüche 8 bis 9,

wobei das Abgleichen des Vogelperspektivbildes mit den DSM-Daten Folgendes umfasst:

Transformieren von Daten in Pixeln in dem Vogelperspektivbild in Daten in Metern; und
Abgleichen der transformierten Daten in Metern mit den DSM-Daten, um 3D-Bilddaten zu erzeugen.

11. Verfahren nach einem der Ansprüche 8 bis 10, wobei das Erzeugen des Tiefenkartenbildes Folgendes einschließt:

Durchführen einer inversen Perspektivtransformation an dem abgeglichenen Vogelperspektivbild, um ein Koordinatensystem des abgeglichenen Bildes in ein Koordinatensystem eines Rohbildes zu ändern;
Bestimmen von Tiefeninformation, basierend auf den invers transformierten Daten, der Höheninformation des fliegenden Luftfahrzeugs und der Lageinformation des fliegenden Luftfahrzeugs; und
Erzeugen des Tiefenkartenbildes, basierend auf der bestimmten Tiefeninformation.

12. Verfahren nach Anspruch 11,
wobei das Erzeugen des Tiefenkartenbildes, basierend auf der bestimmten Tiefeninformation, Folgendes einschließt:
Ersetzen der Höheninformation des abgeglichenen Vogelperspektivbildes durch die bestimmte Tiefeninformation, um das Tiefenkartenbild zu erzeugen.

## Revendications

1. Dispositif monté sur un véhicule aérien comprenant :

une caméra montée sur le véhicule aérien ; et
un processeur couplé à la caméra,
dans lequel le processeur est configuré pour :

obtenir, sur la base d'informations provenant de la caméra pendant le vol du véhicule aérien, une image,
corriger l'image de caméra obtenue sur la base d'informations de posture de la caméra et d'informations de posture du véhicule aérien, incluant des informations de tangage et de roulis du véhicule aérien, en utilisant une valeur de changement de position calculée d'un point de fuite de l'image par rapport à une image avant que la posture du véhicule aérien ne change ;
générer une image de vue en vol d'oiseau en réalisant une transformation de perspective sur l'image corrigée, mettre en correspondance l'image de vue en vol d'oiseau avec des données de modèle numérique de surface (DSM),
générer, sur la base de l'image de vue en vol d'oiseau mise en correspondance, une image de carte de profondeur, et
délivrer en sortie, sur la base de l'image de carte de profondeur, un signal pour une commande de fonctionnement du véhicule aérien, dans lequel le processeur est configuré pour :

reconnaître un repère à partir de l'image obtenue et
obtenir des coordonnées d'un point central du repère ; et
obtenir, sur la base des coordonnées du point central du repère, les données DSM.

2. Dispositif selon la revendication 1, dans lequel le processeur est configuré pour :

obtenir les informations de posture du véhicule aérien à partir d'un dispositif de navigation,
corriger l'image obtenue en ajustant des coordonnées de pixels sur la base des informations de posture du véhicule aérien et de la caméra, et
transformer l'image corrigée en l'image de vue en vol d'oiseau en convertissant les coordonnées de pixels en utilisant une matrice de transformation.

3. Dispositif selon l'une des revendications 1 à 2, dans lequel le processeur est configuré pour :

transformer des données en pixels dans l'image de vue en vol d'oiseau en données en mètres, et
mettre en correspondance les données en mètres transformées avec les données DSM pour générer des données d'image tridimensionnelle.

**4.** Dispositif selon l'une des revendications 1 à 3, dans lequel le processeur est configuré pour :

réaliser une transformation inverse de perspective sur l'image de vue en vol d'oiseau mise en correspondance pour changer un système de coordonnées de l'image mise en correspondance en un système de coordonnées d'une image brute,

déterminer des informations de profondeur sur la base des données transformées de manière inverse, des informations de hauteur du véhicule aérien, et des informations de posture du véhicule aérien, et

générer l'image de carte de profondeur sur la base des informations de profondeur déterminées.

**5.** Dispositif selon la revendication 4,

dans lequel le processeur est configuré pour remplacer des informations de hauteur de l'image de vue en vol d'oiseau mise en correspondance par les informations de profondeur déterminées pour générer l'image de carte de profondeur.

**6.** Dispositif selon l'une des revendications 1 à 5, dans lequel

le processeur est configuré pour stocker l'image de carte de profondeur dans un serveur de base de données.

**7.** Dispositif selon l'une des revendications 1 à 6, dans lequel

la caméra comprend au moins l'un d'un capteur électro-optique ou d'un capteur infrarouge.

**8.** Procédé comprenant :

l'obtention, sur la base d'informations provenant d'une caméra montée sur un véhicule aérien volant, d'une image ;

la correction de l'image obtenue sur la base d'informations de posture de la caméra et d'informations de posture du véhicule aérien volant, incluant des informations de tangage et de roulis du véhicule aérien volant, en utilisant une valeur de changement de position calculée d'un point de fuite de l'image par rapport à une image avant que la posture du véhicule aérien volant ne change ;

la génération, par un processeur, d'une image de vue en vol d'oiseau en réalisant une transformation de perspective sur l'image corrigée ;

la mise en correspondance de l'image de vue en vol d'oiseau avec des données de modèle numérique de surface (DSM) ;

la génération, sur la base de l'image de vue en vol d'oiseau mise en correspondance, d'une image de carte de profondeur ; et

la délivrance en sortie, sur la base de l'image de carte de profondeur, d'un signal pour une commande de fonctionnement du véhicule aérien volant,

dans lequel l'obtention de l'image inclut :

la reconnaissance d'un repère à partir de l'image obtenue;

l'obtention de coordonnées d'un point central du repère ; et

l'obtention, sur la base des coordonnées du point central du repère, des données DSM.

**9.** Procédé selon la revendication 8, comprenant:

l'obtention des informations de posture du véhicule aérien volant à partir d'un dispositif de navigation ;

la correction de l'image obtenue en ajustant des coordonnées de pixels sur la base des informations de posture du véhicule aérien volant et de la caméra ; et

la transformation de l'image corrigée en l'image de vue en vol d'oiseau en convertissant les coordonnées de pixels en utilisant une matrice de transformation.

**10.** Procédé selon l'une des revendications 8 à 9, dans lequel la mise en correspondance de l'image de vue en vol d'oiseau avec les données DSM comprend :

la transformation de données en pixels dans l'image de vue en vol d'oiseau en données en mètres ; et

la mise en correspondance des données en mètres transformées avec les données DSM pour générer des données d'image 3D.

**11.** Procédé selon l'une des revendications 8 à 10, dans lequel la génération de l'image de carte de profondeur inclut :

la réalisation d'une transformation inverse de perspective sur l'image de vue en vol d'oiseau mise en correspondance pour changer un système de coordonnées de l'image mise en correspondance en un système de coordonnées d'une image brute ;

la détermination d'informations de profondeur sur la base des données transformées de manière inverse, des informations de hauteur du véhicule aérien volant, et des informations de posture du véhicule aérien volant ; et

la génération de l'image de carte de profondeur sur la base des informations de profondeur déterminées.

12. Procédé selon la revendication 11,

dans lequel la génération de l'image de carte de profondeur sur la base des informations de profondeur déterminées inclut :

le remplacement d'informations de hauteur de l'image de vue en vol d'oiseau mise en correspondance par les informations de profondeur déterminées pour générer l'image de carte de profondeur.

100

CAMERA
110

ALTIMETER
120

PROCESSOR
160

IMAGE PROCESSING DEVICE
161

MAP MATCHING DEVICE
162

DEPTH MAP GENERATOR
163

NAVIGATION
DEVICE
130

MEMORY
150

COMMUNICATION DEVICE
140

DATABASE SERVER
10

FIG.1

FIG.2

FIG.3

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230115835
- WO 2021051278 A1
- WO 2022093376 A1